# FASCICULE DE BREVET EUROPEEN

(11) **EP 2 959 566 B1**
(45) Date de publication et mention de la délivrance du brevet: **03.04.2019**
(21) Numéro de dépôt: 14713164.3
(22) Date de dépôt: 20.02.2014
(51) Int. Cl.: H02K 21/12, H02K 1/27, H02K 1/28, H02K 15/03

(54) **PIÈCE MOBILE PORTE-AIMANTS POUR MACHINE SYNCHRONE À AIMANTS PERMANENTS**
BEWEGLICHES TEIL MIT MAGNET FÜR PERMANENTMAGNET-SYNCHRONMASCHINE
MOBILE MAGNET HOLDING PIECE FOR A PERMANENT MAGNET SYNCHRONOUS MACHINE

(30) Priorité: 20.02.2013 FR 1351422
(43) Date de publication de la demande: 30.12.2015
(73) Titulaire: Lohr Electromecanique, 67980 Hangenbieten (FR)
(72) Inventeur: DUMAS, Pierre, 67200 Strasbourg (FR)
(74) Mandataire: Merckling, Norbert
(86) Numéro de dépôt international: PCT/FR2014/050352
(87) Numéro de publication internationale: WO 2014/128410

(56) Documents cités:
- WO-A1-2010/109056
- US-A- 4 973 871
- US-A1- 2006 220 483
- US-A1- 2009 251 023
- US-B2- 7 573 168
- Duane C. Hanselman: "Brushless Permanent-Magnet Motor Design" In: "Brushless Permanent-Magnet Motor Design", 1 janvier 1994 (1994-01-01), McGraw-Hill, XP055121095, ISBN: 978-0-07-026025-2 pages 117-121, page 117 - page 121

## Description

La présente invention se rapporte au domaine technique général des moteurs ou des machines comportant des aimants permanents et destinés à générer un courant électrique.

La présente invention concerne notamment une pièce mobile porte-aimants pour machine synchrone à aimants permanents, machine par exemple de type moteur ou générateur ou toute autre machine électrotechnique tournante ou non tournante à aimants permanents.

Une application préférentielle de l'invention porte plus spécifiquement sur un rotor de moteur de traction, par exemple un moteur de traction ferroviaire. Une autre application concerne par exemple divers types de véhicules routiers.

Les machines synchrones à aimants permanents sont composées d'une pièce mobile comportant une série d'aimants permanents de polarité alternée et d'une pièce fixe appelée stator comprenant un ensemble de bobines d'induction.

Suivant le type de machines synchrones, la pièce mobile porte-aimants peut se déplacer linéairement par rapport au stator ou tourner par rapport à celui-ci. Dans ce dernier cas, elle est appelée rotor.

Afin de générer un phénomène d'induction, qui permet la mise en mouvement de la pièce mobile dans le cas d'un moteur ou la création d'un courant dans le cas d'un générateur, ces pièces mobiles comportent des rangées successives d'aimants permanents disposés en vis-à-vis des bobinages du stator. Ces rangées, parallèles entre elles, sont classiquement orientées de façon perpendiculaire au mouvement (c'est-à-dire selon la direction axiale dans le cas d'un mouvement circulaire). A titre d'exemple, les aimants sont de même polarité au sein d'une même rangée, mais sont de polarité alternée d'une rangée sur l'autre. Il est ainsi envisageable également de réaliser des alternances de polarités avec des aimants de même polarité disposés sur deux ou trois rangées successives.

De façon classique, les pièces mobiles comportent un châssis métallique sur lequel les aimants sont fixés par collage. Pour garantir un maintien satisfaisant, la colle utilisée doit toutefois présenter des caractéristiques compatibles avec les efforts importants subis par les aimants et ce quelle que soit la température de fonctionnement.

En effet, pendant l'utilisation de la machine synchrone, ces aimants sont soumis à des forces multiples qui s'exercent selon des directions variées. Il s'agit par exemple dans le cas d'un rotor tournant : de forces axiales qui résultent des attractions et des répulsions magnétiques entre les aimants, de forces radiales liées au bouclage du champ magnétique du stator, de forces centrifuges dues à la rotation plus ou moins rapide du rotor et de forces tangentielles de cisaillement dues au couple.

Actuellement, la tendance consiste à vouloir réaliser des machines synchrones de plus en plus puissantes, tout en les logeant dans un espace de plus en plus réduit. Cette volonté d'amélioration des performances des machines synchrone a conduit parallèlement à une augmentation importante des températures internes de fonctionnement de ces machines.

Les colles utilisées pour la fixation des aimants sur la pièce mobile de ces machines doivent donc pouvoir résister à de telles températures, tout en garantissant une bonne tenue des aimants malgré les contraintes importantes qui s'y exercent. De telles performances de tenue à haute température sont difficiles à obtenir pour une colle.

En outre, cette augmentation de la température interne de fonctionnement des machines synchrones provoque une dilatation structurelle qui n'est pas de même intensité selon la composition respective de chacune des pièces. On observe ainsi une dilatation différentielle entre le châssis de la pièce mobile qui est généralement en acier et les aimants qui sont par exemple en néodyme fer bore.

Les colles utilisées, pour pouvoir assurer une fixation suffisamment solide des aimants, sont des colles rigides qui ne présentent généralement pas une élasticité suffisante pour être compatible avec cette dilatation différentielle.

En cas de déformation de la pièce mobile provoquée par de telles différences de dilatation ou par des contraintes extérieures ou encore en cas d'emballement thermique suite par exemple à un disfonctionnement de convertisseur, il se produit parfois une rupture du film de colle entre le châssis et les aimants qui peut entraîner un glissement de tout ou partie des aimants sur le stator. Une telle rupture se traduit par une perte brutale de performance de la machine synchrone, voir même par un blocage complet de celle-ci.

Un autre inconvénient de ces machines synchrones est l'alternance brutale des polarités des aimants permanents disposés en rangées parallèles lors du déplacement de la pièce mobile devant le stator. Ce brusque changement de polarité Nord/Sud des aimants provoque une oscillation du couple avec une pente très raide qui génère des vibrations et des à-coups au niveau des engrenages, des transmissions et de tous les organes mécaniques. Ces vibrations, en plus d'un certain inconfort pour les passagers lié au bruit généré, conduisent à une usure prématurée et dommageable de ces organes mécaniques.

Dans le cas d'une application préférentielle de ces machines synchrones à des moteurs-roue, ces brusques oscillations du couple provoquent une usure prématurée des pneumatiques.

Dans le but d'atténuer les ondulations de couple dues au passage brutal d'une polarité à l'autre, il a été proposé dans l'art antérieur de disposer les aimants non plus en rangées perpendiculaires au mouvement, mais selon une disposition hélicoïdale. Avec une telle disposition en hélice, la transition entre les polarités des rangées successives d'aimants se fait plus progressivement pendant le déplacement de la pièce mobile. Les oscillations du couple s'en trouvent donc amorties.

En plus ou à la place de cette disposition hélicoïdale des aimants de la pièce mobile, on a aussi pensé dans l'art antérieur à disposer les bobines du stator en hélice.

Cependant, cette disposition particulière en hélice des aimants de la pièce mobile et/ou des bobines du stator est assez difficile à réaliser. La pose de ces éléments, déjà difficile en raison des interactions magnétiques existant entre les aimants, devient particulièrement complexe et délicate. La fabrication de ces machines synchrones est compliquée, longue et coûteuse.

En outre, du fait de cette disposition en hélice, le rendement résultant de la machine synchrone se trouve significativement diminué.

Le but de l'invention est de fournir une pièce mobile pour machine synchrone ne présentant pas les inconvénients précités et qui comporte un dispositif de fixation mécanique des aimants permanents fiable et n'altérant pas les performances de la machine.

Un autre but de l'invention est de compléter le collage des aimants permanents en garantissant une fixation parfaite de ces aimants quelle que soit la température de fonctionnement de la machine.

Un autre but de l'invention est de proposer une pièce mobile de machine synchrone dont les aimants sont disposés en rangées perpendiculaires au mouvement, mais qui, grâce à la forme particulière des aimants et du dispositif de fixation mécanique de ces aimants, permet un amortissement des oscillations du couple, comparable à celui obtenu avec une disposition en hélice, tout en conservant un meilleur rendement.

De plus, comme ses aimants sont placés en rangées perpendiculaires au mouvement, la pièce mobile selon l'invention ne présente pas les difficultés de fabrication des pièces de l'art antérieur à disposition hélicoïdale. Au contraire, l'invention enseigne un procédé de pose et de fixation des aimants permanents sur le châssis de la pièce mobile, particulièrement pratique et avantageux.

Dans la présente, il conviendra de comprendre le terme « aimant » au sens large, désignant d'une part des éléments réalisés avec des matériaux magnétiques classiques et d'autre part des éléments réalisés avec des matériaux magnétisables. Ces matériaux magnétisables sont par exemple réalisés avec des matériaux à base de ferrite ou des alliages du genre SmCo, AlNiCo ou NdFeB.

Par châssis, il convient d'entendre entre autres, une structure support pourvue d'une culasse.

Les objets assignés à l'invention sont atteints à l'aide d'une pièce mobile porte-aimants pour machine synchrone à aimants permanents, prévue pour se déplacer en face d'un stator fixe comprenant un ensemble de bobines d'induction. Cette pièce mobile comporte un châssis métallique et une série d'aimants permanents solidarisés avec ledit châssis, ces aimants étant disposés en rangées parallèles entre elles et perpendiculaires au mouvement de la pièce mobile (c'est-à-dire disposées selon une direction axiale dans le cas d'un mouvement circulaire), ces aimants étant de même polarité au sein d'une même rangée. Cette pièce mobile comporte également au moins une réglette de fixation amagnétique placée longitudinalement entre deux rangées successives d'aimants permanents et fixée mécaniquement au châssis.

La pièce mobile selon l'invention est caractérisée :
en ce que ladite réglette de fixation
   - s'étend sur sensiblement toute la longueur de ces deux rangées et contribue au blocage de tous les aimants de ces deux rangées,
   - comporte une base d'appui à flancs arrondis convexes, qui assure le blocage vertical des aimants de ces deux rangées, et une extension supérieure longitudinale qui sert d'entretoise entre ces deux rangées et assure le blocage latéral des aimants de ces deux rangées du côté de la réglette de fixation,
et en ce que chaque aimant de ces deux rangées comporte, au niveau de son chant adjacent à la réglette de fixation, une partie arrondie concave de hauteur au moins égale à la moitié de la hauteur totale de l'aimant et de forme complémentaire à celle du flanc arrondi convexe correspondant de la base d'appui de la réglette de fixation, dans laquelle la base d'appui de la réglette de fixation est au moins partiellement engagée.

Selon un exemple de réalisation conforme à l'invention, la pièce mobile porte-aimants comporte une réglette de fixation entre chaque rangée d'aimants permanents.

Selon un exemple de réalisation conforme à l'invention, la réglette de fixation est fixée au châssis par vissage, au moyen de vis qui traversent des trous ménagés dans le châssis et viennent s'engager dans des trous taraudés de la réglette de fixation.

Selon une variante préférentielle de l'invention, la largeur de l'extension supérieure longitudinale de la réglette de fixation est inférieure au diamètre de ces trous taraudés dans la réglette de fixation.

Selon une variante préférentielle de l'invention, lesdits trous taraudés sont réalisés dans la base d'appui de la réglette de fixation, l'extension supérieure longitudinale de la réglette de fixation étant interrompue au niveau de ces trous taraudés.

Selon un exemple de réalisation conforme à l'invention de la pièce mobile porte-aimants, les flancs arrondis convexes de la base d'appui de la réglette de fixation sont en développante de cercle ou en arc de cercle.

La pièce mobile porte-aimants est prévue pour se déplacer linéairement ou en rotation, dans une machine de type moteur ou générateur.

A titre d'exemple, la pièce mobile porte-aimants est un rotor de moteur de traction.

Selon un exemple de réalisation conforme à l'invention de la pièce mobile porte-aimants, les aimants permanents sont en outre fixés par collage sur le châssis.

Selon un exemple de réalisation de la pièce mobile porte-aimants conforme à l'invention, les aimants permanents et au moins une partie du châssis sont enrobés d'une résine d'appui, de maintien et de protection, qui améliore le maintien desdits aimants.

La réglette de fixation selon l'invention permet avantageusement de réaliser une immobilisation mécanique des aimants permanents dans toutes les directions, éventuellement à l'exception du blocage longitudinal qui peut être assuré par des épaulements du châssis.

Selon une autre variante de l'invention, la réglette de fixation peut en outre comporter à l'une au moins de ses extrémités une extension servant de butée au dernier aimant d'au moins une des deux rangées entre lesquelles la réglette de fixation est placée, cette extension assurant ainsi le blocage longitudinal des aimants de cette rangée.

La réglette complète ainsi le collage et garantit une fixation parfaite des aimants même à haute température.

La colle utilisée peut être choisie plus souple et plus élastique, car elle ne sert plus qu'à réaliser un matelas entre les aimants et le châssis pour garantir un appui homogène, ainsi qu'à assurer le maintien provisoire des aimants jusqu'à la mise en place des réglettes de fixation.

En outre, la forme particulière de la réglette de fixation et plus précisément la forme bombée arrondie des flancs de sa base d'appui, ainsi que celle complémentaire du chant adjacent des aimants permettent d'obtenir une réduction puis une augmentation progressive des champs magnétiques lors du déplacement de la pièce mobile devant le stator et ainsi un adoucissement des ondulations de couple induites par le passage d'une polarité à l'autre.

Grâce à l'invention, on obtient un amortissement des ondulations de couple équivalent à celui des pièces mobiles porte-aimants à disposition hélicoïdale, mais avec un meilleur rendement et une mise en place des aimants et/ou des bobinages bien plus aisée et beaucoup moins coûteuse.

Les formes optimisées des réglettes et des aimants, en l'occurrence les parties concaves/convexes permettent d'obtenir un gain en volume desdits aimants, contribuant ainsi à leur efficacité.

La pièce porte-aimants conforme à l'invention présente en outre l'avantage de comporter des moyens de fixation n'altérant pas ou extrêmement faiblement les lignes de champ magnétique d'une machine synchrone du genre moteur ou générateur.

On connait dans l'art antérieur un autre type de réglette qui a été divulgué dans la demande de brevet US 2006/0220483. Cependant, cette réglette antérieure est moins performante et présente de nombreux inconvénients.

Tout d'abord, elle présente une longueur limitée qui correspond à la longueur d'un aimant unitaire et non à celle de toute une rangée. Une réglette doit donc être placée entre chaque couple d'aimants. Elle nécessite en outre trois vis de maintien et trois ressorts rondelles par réglette, ce qui multiplie le nombre de pièces à installer et complexifie le procédé de pose.

De plus, la largeur de la réglette est très importante au niveau de sa partie centrale, qui est destinée à être intercalée entre deux aimants, et dans laquelle sont logées les vis de maintien et les ressorts rondelles. Cette largeur est pratiquement équivalente à la moitié de celle d'un aimant. Les aimants se retrouvent éloignés les uns des autres, et la surface totale pouvant être consacrée aux éléments magnétiques est fortement réduite. Le flux magnétique diminue en conséquence, ce qui provoque une baisse des performances de la machine.

Enfin, cette réglette antérieure comporte en partie supérieure de ses chants latéraux, des surfaces d'appui inclinées qui viennent appuyer sur la partie supérieure des aimants qui est biseautée de manière complémentaire, afin d'assurer le blocage vertical de ces aimants.

Le brevet US 7,573,268 décrit également une réglette de fixation comportant des surfaces d'appui inclinées.

Cependant et comme il sera largement expliqué par la suite, ces surfaces d'appui inclinées ne permettent pas de réaliser un amortissement des ondulations de couple, du fait de leur forme inclinée et non arrondie, et du fait de leur faible hauteur qui est largement inférieure à la moitié de la hauteur totale de l'aimant.

L'objectif visé par l'invention n'est donc pas atteint.

L'invention propose également un procédé particulièrement avantageux de fixation d'aimants sur le châssis d'une pièce mobile porte-aimants pour machine synchrone à aimants permanents, prévue pour se déplacer en face d'un stator fixe à bobinages.

Les objets assignés à l'invention sont atteints à l'aide d'un procédé d'obtention d'une pièce mobile porte-aimants telle que présentée ci-dessus, caractérisé en ce qu'il comporte les étapes suivantes :
- fournir un châssis métallique et ménager des trous dans le châssis selon des directions radiales,
- fournir des réglettes de fixation amagnétiques comportant une base d'appui à flancs latéraux arrondis convexes et une extension supérieure longitudinale,
- fournir des aimants permanents ou des éléments magnétisables comportant, au niveau de leurs chants une partie concave arrondie, de hauteur au moins égale à la moitié de la hauteur totale de l'aimant permanent ou de l'élément magnétisable, et de forme complémentaire à celle des flancs latéraux arrondis convexes de la base d'appui des réglettes de fixation,
- mettre en place successivement des rangées desdits aimants permanents ou éléments magnétisables sur le châssis, en laissant des espaces libres au moins entre les aimants permanents ou éléments magnétisables de rangées différentes,
- placer les réglettes de fixation longitudinalement entre les rangées et retenir lesdits aimants permanents ou éléments magnétisables sur le châssis au moins à l'aide des réglettes amagnétiques en engageant au moins partiellement la base d'appui des réglettes de fixation dans la partie concave arrondie des aimants permanents ou des éléments magnétisables pour les bloquer verticalement et en les bloquant latéralement au moyen de l'extension supérieure longitudinale des réglettes de fixation servant d'entretoise entre les rangées, les réglettes de fixation étant fixées sur ledit châssis grâce à des vis traversant les trous et engagées dans lesdites réglettes de fixation,
- remplir au moins ces espaces libres avec une résine d'appui,
- polymériser la résine d'appui,
- et, dans le cas où l'on utilise des éléments magnétisables, magnétiser lesdits éléments magnétisables de manière à ce qu'ils constituent des aimants permanents.

Selon un exemple de mise en oeuvre, le procédé conforme à l'invention consiste à fixer les éléments sur le châssis, également par collage au préalable de l'opération de fixation par réglettes.

Selon un exemple de mise en oeuvre, le procédé conforme à l'invention consiste à visser les réglettes directement sur le châssis.

L'invention enseigne également une machine synchrone à aimants permanents caractérisée en ce qu'elle comporte une pièce mobile porte-aimants telle que décrite ci-dessus.

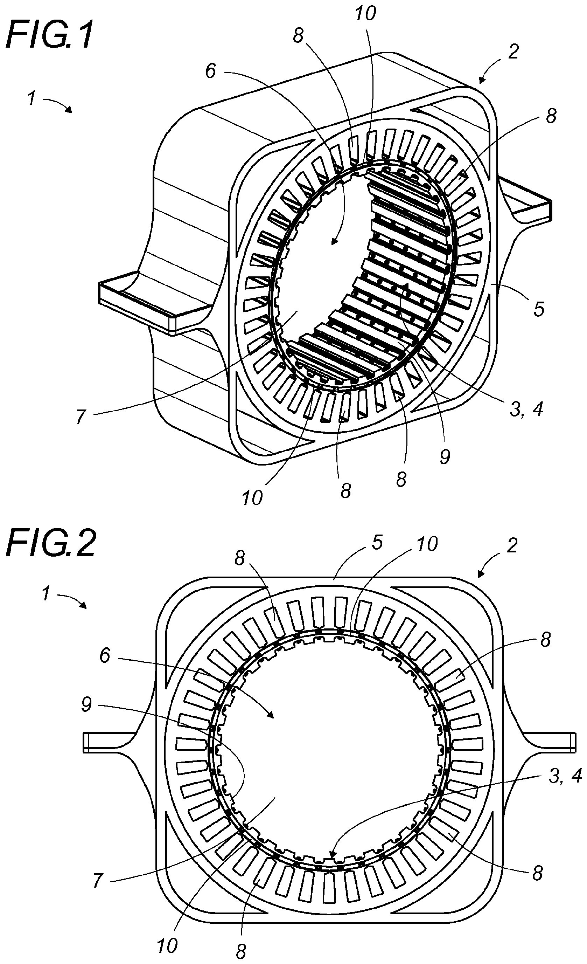

D'autres caractéristiques et avantages de l'invention apparaîtront à la lecture de la description détaillée qui va suivre, description faite en référence aux dessins annexés, dans lesquels :•
- es figures 1 et 2 sont des vues latérales, respectivement en perspective et plane, d'une machine synchrone à aimants permanents constituée d'un stator extérieur et d'un rotor intérieur selon une première variante de l'invention ;
- la figure 3 est une vue latérale en perspective du rotor de la machine synchrone de la figure 1, dont une réglette de fixation selon l'invention a été représentée à l'état dissocié ;
- la figure 4 est une vue latérale plane du rotor de la figure 1 ;
- la figure 5 est une vue latérale en perspective d'un rotor extérieur selon une autre variante de l'invention, dont une réglette de fixation a été représentée à l'état dissocié ;
- la figure 6 est une vue en coupe transversale de la partie inférieure du rotor extérieur de la figure 5 ;
- la figure 7 est un agrandissement du détail encerclé sur la figure 6 ;
- la figure 8 est une vue en perspective du rotor de la figure 5 dont on n'a pas représenté le châssis ;
- la figure 9 est un agrandissement du détail de gauche encerclé sur la figure 6 dans lequel on n'a pas représenté les vis ;
- la figure 10 est un agrandissement du détail de droite encerclé sur la figure 8 ;
- les figures 11 à 15 sont des vues, respectivement en perspective, en coupe transversale, en coupe longitudinale, plane de côté et plane de dessus, d'un exemple de réglette de fixation selon l'invention ;
- la figure 16 est une vue en coupe transversale de la partie supérieure du rotor de la figure 5, coupe passant par les vis des réglettes de fixation ;
- la figure 17 est un graphique représentant l'induction produite dans l'entrefer par les aimants, avec en traits discontinus le cas d'un rotor classique sans réglette de fixation, en trait continu le cas d'un rotor à réglettes à flancs arrondis selon l'invention et en pointillés le cas d'un rotor à réglettes à flancs inclinés ;
- la figures 18 est une vue en perspective d'un autre exemple de réglette de fixation selon l'invention ; et
- la figures 19 est une vue de dessus en perspective de la réglette de fixation de la figure 18 placée entre deux rangées d'aimants.

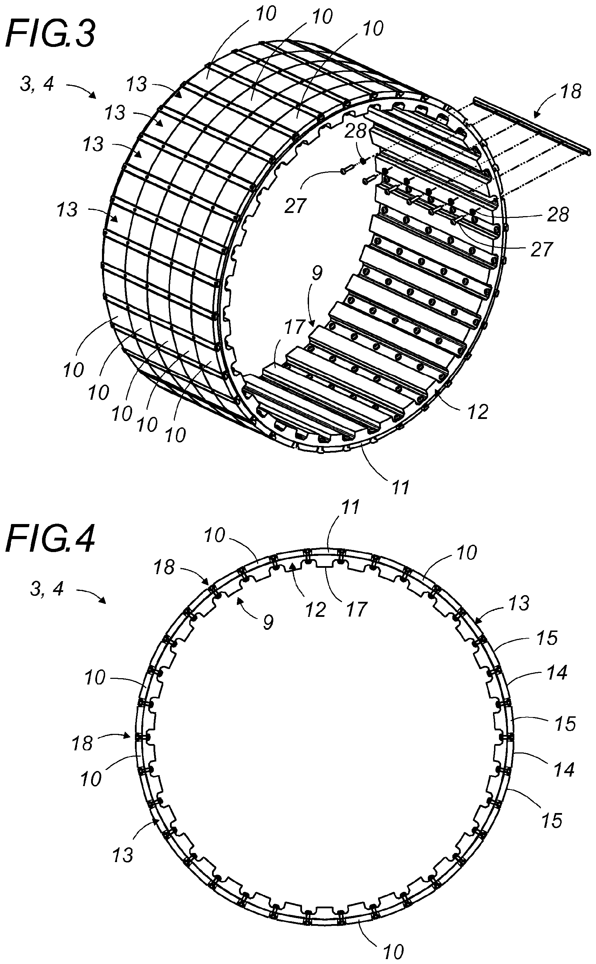

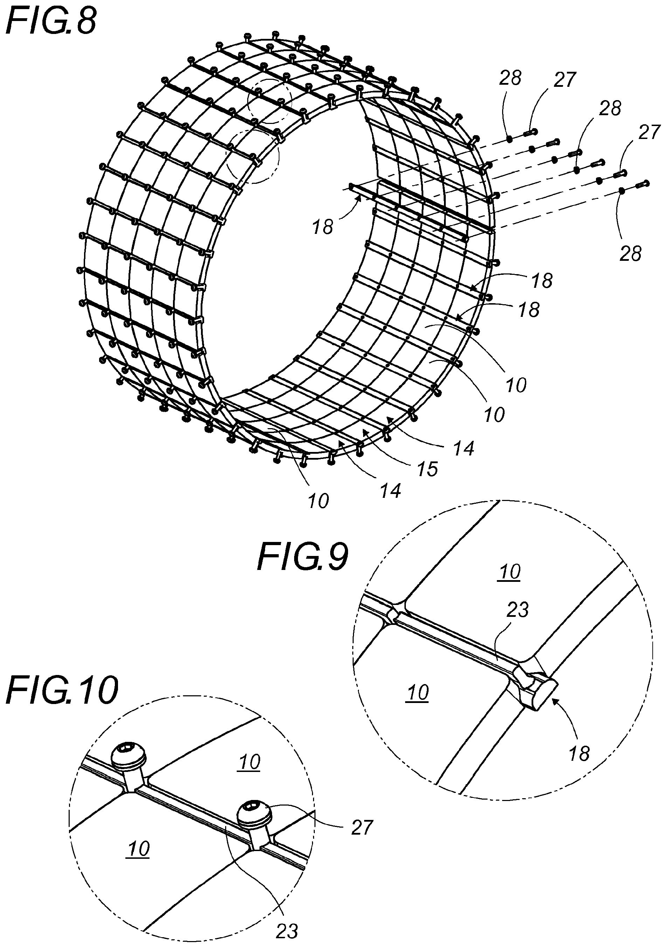

La présente invention va maintenant être décrite de façon détaillée en référence aux figures 1 à 19. Les éléments équivalents représentés sur les différentes figures porteront les mêmes références numériques ou alphanumériques.

Sur les figures 1 à 4, on a représenté un premier exemple d'une machine synchrone 1 à aimants permanents selon l'invention. Cette machine synchrone 1 comprend classiquement une pièce fixe appelée stator 2 et une pièce mobile 3. La pièce mobile 3 représentée est un rotor 4 qui se déplace en tournant par rapport au stator 2.

Bien que cela n'ait pas été représenté sur les différentes figures, l'invention peut s'appliquer de la même façon à une machine synchrone qui comprend une pièce mobile 3 à déplacement linéaire.

Le stator 2 représenté est un stator extérieur qui comprend un cadre périphérique 5 en caisson, par exemple sensiblement parallélépipédique, qui renferme une chambre centrale 6, creuse de forme cylindrique, destinée à loger le rotor 4. La chambre centrale 6 cylindrique est ouverte sur chacune de ses faces circulaires 7 et délimite ainsi un volume intérieur traversant pour la réception du rotor 4.

Le stator 2 comprend également une série de bobines d'induction 8, également appelées bobinages, disposées tout autour de la chambre centrale 6 et à proximité immédiate de celle-ci de façon appropriée pour réaliser le phénomène d'induction recherché.

Dans la chambre centrale 6, se trouve la pièce mobile 3 qui, dans la variante représentée sur les figures 1 à 4, est un rotor 4 intérieur, c'est-à-dire placé à l'intérieur du stator 2.

Le rotor 4 comprend un châssis 9, préférentiellement métallique, de forme cylindrique et de diamètre légèrement inférieur à celui de la chambre centrale 6 cylindrique du stator 2.

Il comporte en outre une pluralité d'aimants permanents 10 qui sont fixés sur la face extérieure 11 de la paroi longitudinale 12 de son châssis 9 cylindrique. Ces aimants 10 sont préférentiellement plats et de forme générale parallélépipédique avec une faible hauteur et des bases sensiblement rectangulaires ou carrées. Les pôles magnétiques de ces aimants 10 sont situés au niveau de leurs bases, l'une étant de polarité Nord et l'autre Sud.

Les aimants permanents 10 sont disposés en rangées 13, parallèles entre elles et orientées selon la direction axiale du cylindre.

Tous les aimants permanents 10 d'une même rangée 13 sont de même polarité, c'est-à-dire qu'ils sont disposés de manière à tous présenter la base de même pôle (Nord ou Sud) du même côté. Ils ont ainsi par exemple tous leur base de polarité Nord dirigée vers la paroi longitudinale 12 du châssis 9 et leur base de polarité Sud dirigée vers l'extérieur du rotor 4, formant ainsi une rangée dite « rangée Sud » 14, ou inversement leur base de polarité Sud dirigée vers le châssis 9 et leur base de polarité Nord dirigée vers l'extérieur du rotor 4, formant ainsi une rangée dite « rangée Nord » 15.

Leur polarité est par contre inversée alternativement d'une rangée 13 sur l'autre, les rangées Nord 15 et les rangées Sud 14 se succédant alternativement sur sensiblement toute la surface de la paroi longitudinale 12 du châssis 9.

Du fait de cette disposition, les aimants 10 ont tendance à se repousser mutuellement au sein d'une même rangée 13, mais à s'attirer d'une rangée sur l'autre.

Selon un autre exemple de réalisation de la pièce mobile 3 conforme à l'invention, plusieurs rangées 13 successives, par exemple deux ou trois, comportent des aimants 10 de même polarité.

Lorsque le rotor 4 est placé, en position d'utilisation, dans la chambre centrale 6 du stator 2, les aimants permanents 10 du rotor 4 se retrouvent à proximité et en vis-à-vis des bobines d'induction 8 du stator 2 et peuvent coopérer avec celles-ci. Le passage d'un courant électrique dans les bobines d'induction 8 du stator 2 provoque un mouvement de rotation du rotor 4 dans le cas d'une machine synchrone 1 utilisée comme moteur, et la mise en rotation du rotor 4 entraine l'apparition d'un courant alternatif dans les bobines d'induction 8 du stator dans le cas d'une machine synchrone 1 utilisée comme générateur.

Evidemment, l'invention s'applique également aux machines synchrones 1 comprenant un stator 2 intérieur et un rotor 4 extérieur.

Dans ce cas, le stator 2 est de diamètre inférieur à celui du rotor 4 et est destiné à être placé à l'intérieur de ce dernier. Les bobines d'induction du stator sont situées sur sa périphérie en direction du rotor extérieur.

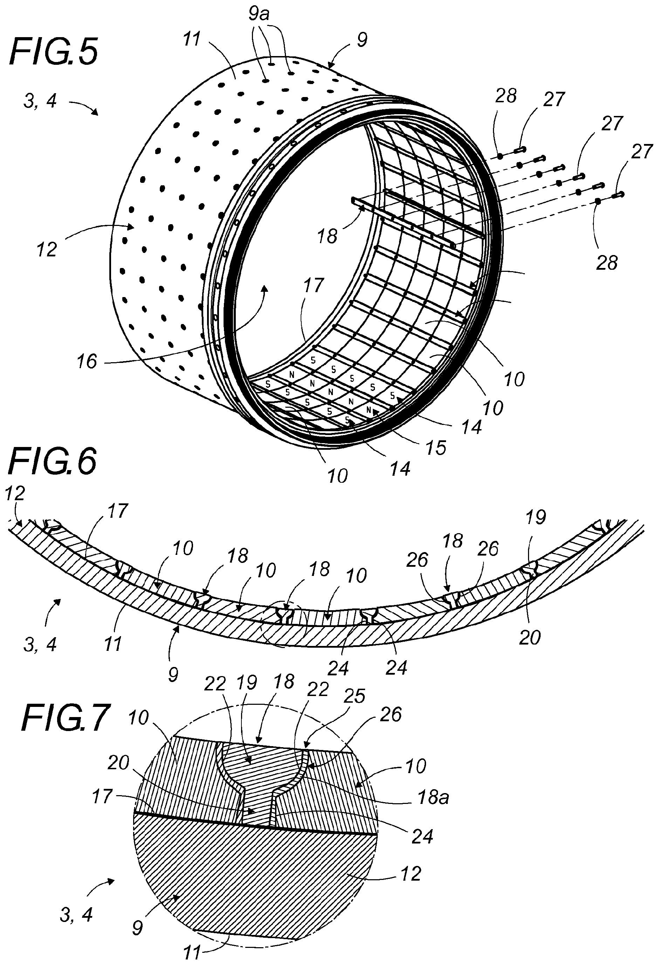

Un exemple de rotor 4 extérieur a été représenté sur les figures 5 à 10. Il comprend un châssis 9, préférentiellement métallique, de forme cylindrique qui délimite dans son volume intérieur creux un espace de réception 16 pour le stator 2.

Il comporte une pluralité d'aimants permanents 10 qui sont cette fois fixés sur une face intérieure 17 de la paroi longitudinale 12 de son châssis 9 cylindrique, de manière à se retrouver, en position d'utilisation, à proximité et en vis-à-vis des bobines d'induction 8 du stator placé dans l'espace de réception 16.

Les aimants permanents 10 sont disposés en rangées 13, parallèles entre elles et orientées selon la direction axiale du cylindre.

Tous les aimants permanents 10 d'une même rangée 13 sont de même polarité. Ils ont ainsi par exemple tous leur base de polarité Nord dirigée vers la paroi longitudinale 12 du châssis 9 et leur base de polarité Sud dirigée vers l'intérieur du rotor 4, formant ainsi une « rangée Sud » 14. Inversement, si leur base de polarité Sud est dirigée vers le châssis 9 et leur base de polarité Nord est dirigée vers l'intérieur du rotor 4, ils forment une « rangée Nord » 15.

Selon un exemple de réalisation, non limitatif, leur polarité est par contre inversée alternativement d'une rangée sur l'autre, les rangées Nord 15 et les rangées Sud 14 se succédant alternativement sur sensiblement toute la surface de la paroi longitudinale 12 du châssis 9.

Qu'il s'agisse d'un rotor 4 intérieur ou extérieur ou d'une pièce mobile à déplacement linéaire, la pièce mobile 3 comporte selon l'invention au moins une réglette de fixation 18 qui est une pièce allongée qui s'étend longitudinalement entre deux rangées 13 successives d'aimants permanents 10. La pièce mobile 3 en comporte préférentiellement plusieurs, et de préférence une réglette de fixation 18 entre chacune de ses rangées 13 d'aimants permanents 10.

Les réglettes de fixation 18 s'étendent parallèlement aux rangées 13 d'aimants permanent 10, et donc selon une direction sensiblement perpendiculaire au mouvement de la pièce mobile 3. Elles sont ainsi disposées selon la direction axiale du rotor 4 cylindrique dans les exemples de réalisation représentés.

Les réglettes de fixation 18 s'étendent de préférence sur sensiblement toute la longueur des rangées 13 d'aimants permanents 10. Une unique réglette de fixation 18 peut ainsi suffire à réaliser le blocage des aimants 10 sur toute la longueur de la rangée 13.

Les réglettes de fixation 18 sont réalisées en un matériau amagnétique, par exemple en acier inoxydable amagnétique.

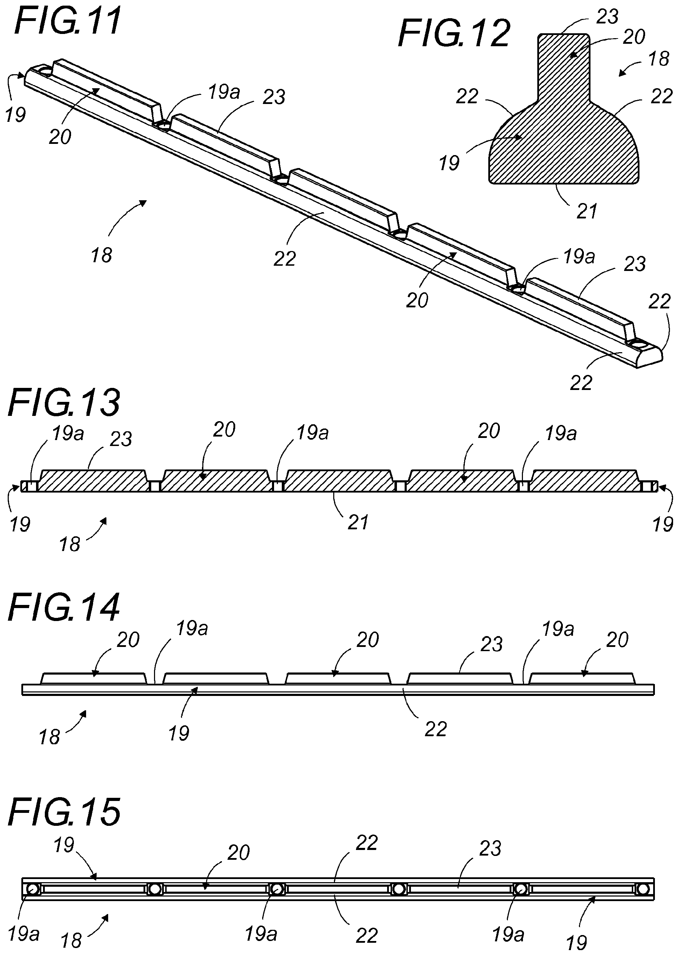

Un exemple d'une telle réglette de fixation 18 a été représenté sur les figures 11 à 15.

Comme on le voit sur ces figures et plus particulièrement sur la vue en coupe de la figure 12, la réglette de fixation 18 selon l'invention comporte une base d'appui 19 prolongée par une extension supérieure longitudinale 20.

La base d'appui 19 présente une face inférieure 21, par exemple plane, et des flancs latéraux 22 bombés convexes. Ces flancs latéraux 22 sont avantageusement arrondis, et plus préférentiellement en développante de cercle ou en arc de cercle. Les formes courbes, sans angles vifs, sont privilégiées car elles permettent d'éviter les concentrations de lignes de champs.

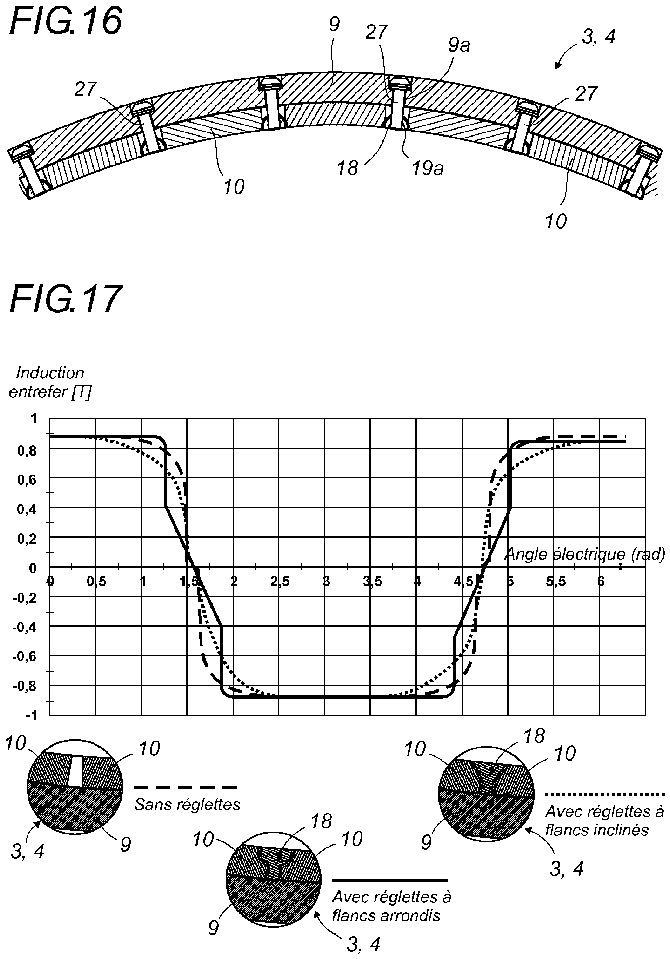

Pour ces flancs latéraux 22, une forme arrondie est également largement préférable à une simple forme inclinée comme il sera démontré en référence à la figure 17.

En effet, si des flancs inclinés sur une hauteur suffisante permettent d'atteindre un bon amortissement des oscillations du couple, ils se traduisent également par une importante diminution du couple moyen, ce qui dégrade considérablement les performances de la machine synchrone.

L'extension supérieure longitudinale 20 de la réglette de fixation 18 présente par exemple une section de forme générale rectangulaire, à face supérieure 23.

Comme on peut le voir en particulier sur la figure 7, lorsque la réglette de fixation 18 est placée sur la pièce mobile 3, elle s'intercale entre deux rangées 13 d'aimants permanents 10. Son extension longitudinale 20 est insérée entre les deux rangées 13 d'aimants à la manière d'une entretoise séparant les chants 24 des aimants, sa face supérieure 23 dirigée vers le châssis 9. Elle assure ainsi le blocage latéral des aimants 10, c'est-à-dire le blocage selon une direction tangentielle au mouvement dans le cas d'un déplacement circulaire.

De préférence, la largeur de l'extension longitudinale 20 est la plus faible possible, tout en restant suffisante pour assurer une tenue mécanique satisfaisante, de manière à laisser le plus de place possible pour les aimants 10 qui sont ainsi très proches les uns des autres.

La surface des éléments magnétiques est ainsi maximale, ce qui garantit un flux magnétique très important et des performances améliorées pour la machine synchrone.

A titre d'exemple, sur le mode de réalisation préférentiel représenté, la superficie occupées par les réglettes de fixation 18 ne représente qu'environ 5% de la superficie totale, le reste étant occupé par les éléments magnétiques.

Les flancs latéraux 22 de la base d'appui 19 viennent reposer sur les bords supérieurs longitudinaux 25 des aimants 10 aimants, et assurent ainsi le blocage vertical (ou axial) des aimants 10 sur lesquels ils reposent.

Avantageusement, les aimants 10 situés de part et d'autre de la réglette de fixation 18 comportent, au niveau de leurs bords supérieurs longitudinaux 25 et de leur chant 24, une partie concave 26 de forme arrondie complémentaire à celle du flanc latéral 22 arrondi correspondant de la base d'appui 19 de la réglette de fixation 18, dans laquelle la base d'appui 19 de la réglette de fixation 18 vient au moins partiellement s'engager.

Afin d'assurer un amortissement satisfaisant des oscillations du couple, la hauteur de la partie concave 26 de l'aimant 10 doit être de hauteur suffisante, c'est-à-dire au moins égale à la moitié de la hauteur totale de l'aimant.

Les réglettes de fixation 18 sont fixées mécaniquement au châssis 9 de la pièce mobile 3 par tout moyen de fixation approprié, par exemple par vissage, rivetage, boulonnage, sertissage ou tout autre moyen analogue.

Les moyens de fixation utilisés peuvent également être réalisés en matériau amagnétique.

Sur les exemples représentés, les réglettes de fixation 18 sont vissées au châssis 9 du rotor 4 par un ensemble de vis 27 et de rondelles 28. Des trous 19a et 9a sont avantageusement prévus à cet effet respectivement dans la base d'appui 19 et dans le châssis 9. Les trous 19a sont par exemple des perçages pourvus d'un taraudage pour coopérer avec les vis 27.

Sur le mode de réalisation préférentiel représenté, l'extension supérieure longitudinale 20 des réglettes de fixation 18 est plus étroite que le diamètre des trous taraudés 19a de la réglette de fixation 18.

De ce fait, l'extension supérieure longitudinale 20 est préférentiellement interrompue au niveau de ces trous taraudés 19a qui sont uniquement réalisés dans la base d'appui 19 de la réglette de fixation 18.

Avantageusement, la réglette de fixation 18 selon l'invention peut être solidement fixée au châssis 9 avec peu de vis 27. Une vis placée à l'extrémité des aimants est suffisante et il n'est donc pas nécessaire d'usiner les aimants 10 spécialement pour pouvoir faire passer des vis 27 supplémentaires entre les couples d'aimants juxtaposés. Le nombre de pièces à mettre en place est limité et le procédé de pose extrêmement simple et rapide

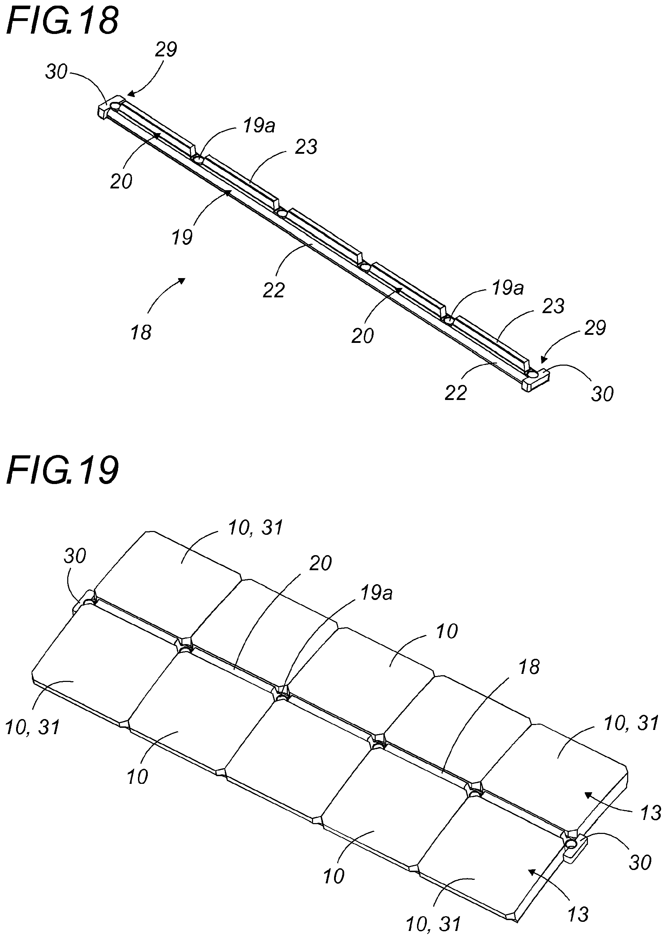

Une autre variante de l'invention a été représentée sur les figures 18 et 19.

Dans cette variante, la réglette de fixation 18 comporte à l'une de ses extrémités 29, ou de préférence à ces deux extrémités 29, une extension 30 qui sert de butée au dernier 31 des aimants 10 d'au moins une des deux rangées 13 entre lesquelles la réglette de fixation 18 est placée. Cette extension 30 assure ainsi le blocage longitudinal des aimants 10 de cette rangée 13 d'aimants.

Avantageusement, l'extension 30 peut, comme représenté, dépasser des deux côtés de la réglette de fixation 18 et ainsi assurer simultanément le blocage longitudinal des aimants 10 des deux rangées 13 d'aimants entre lesquelles la réglette de fixation 18 est intercalée.

Les aimants permanents 10 peuvent également être constitués d'éléments en matériau magnétisable. L'assemblage de ces éléments est ainsi facilité dans la mesure où la magnétisation desdits éléments intervient après leur montage sur le châssis 9.

L'invention concerne également un procédé de fixation d'aimants permanents sur un châssis 9 d'une pièce mobile porte-aimants telle que présentée ci-dessus. Ce procédé est mis en oeuvre à l'aide des étapes suivantes :
- ménager des trous 9a dans le châssis 9 selon des directions radiales,
- utiliser des éléments formés dans un matériau magnétisable et mettre en place successivement des rangées 13 d'éléments sur le châssis en laissant des espaces libres au moins entre des éléments de rangées 13 différentes,
- retenir les éléments sur le châssis 9 au moins à l'aide des réglettes de fixation 18 amagnétiques lesquelles sont fixées sur ledit châssis 9 grâce à des vis 27 traversant les trous 9a et engagées dans lesdites réglettes de fixation 18,
- remplir au moins ces espaces libres avec une résine d'appui,
- polymériser la résine d'appui,
- et magnétiser les éléments de manière à ce qu'ils constituent des aimants permanents 10.

Selon une variante de mise en oeuvre du procédé conforme à l'invention, ledit procédé comporte les étapes suivantes :
- ménager des trous 9a dans le châssis 9 selon des directions radiales,
- utiliser des aimants permanents 10 et mettre en place successivement des rangées 13 d'aimants permanents 10 sur le châssis 9 en laissant des espaces libres au moins entre des aimants 10 de rangées 13 différentes,
- retenir les aimants permanents 10 sur le châssis 9 au moins à l'aide des réglettes de fixation 18 lesquelles sont fixées sur ledit châssis 9 grâce à des vis 27 traversant les trous 9a et engagées dans lesdites réglettes de fixation 18,
- remplir au moins ces espaces libres avec une résine d'appui,
- et polymériser la résine d'appui.

Les éléments magnétisables ou les aimants permanents 10 sont par exemple fixés sur le châssis 9, par une opération de collage au préalable et en complément de l'opération de fixation par les réglettes de fixation 18.

Selon un exemple de mise en oeuvre, le procédé conforme à l'invention consiste à visser les réglettes de fixation 18 directement sur le châssis 9 ou sur une culasse rapportée sur un châssis 9.

La figure 7 montre à titre d'exemple, l'utilisation d'une résine d'appui 18a, permettant de réaliser une liaison souple et de retenir les aimants 10 avant le montage des réglettes de fixation 18. Lors du montage des réglettes de fixation 18, et plus précisément lors du serrage des vis 27, une partie de la résine d'appui 18a va avantageusement être poussée dans les interstices existant entre les aimants 10 et les réglettes de fixation 18. La polymérisation de la résine d'appui 18a, ainsi répartie contribue donc au maintien et à la protection de l'assemblage ainsi constitué.

La figure 17 illustre l'effet d'amortissement des oscillations de couple obtenu avec le dispositif selon l'invention.

Les courbes représentées sur le graphique de la figure 17 représentent l'induction produite dans l'entrefer par les aimants 10 dans trois cas de figure différents.

On a représenté en traits discontinus le cas d'un rotor qui ne comporte pas de réglettes de fixation pour maintenir les aimants 10 qui sont simplement collés sur le châssis 9. Les aimants 10 sont parallélépipédiques et présentent des flancs verticaux.

Dans ce premier cas de figure, l'induction s'inverse brutalement lors du déplacement de la pièce mobile porteuse des aimants 10. Le couple généré présente de ce fait un fort niveau d'ondulation, provoqué par le passage brutal d'une polarité à une autre.

On a représenté en pointillé le cas d'un rotor dont les aimants 10 sont maintenus par une réglette de fixation 18 à flancs latéraux 22 inclinés.

On constate que dans ce cas, l'inversion est considérablement adoucie, ce qui diminue fortement le niveau d'ondulation au niveau du couple. Cependant, lors du déplacement du rotor, il existe des zones importantes où l'induction n'est pas maximale. Le couple moyen diminue fortement, ce qui dégrade les performances globales de la machine d'une façon très désavantageuse.

Le troisième cas, représenté en trait continu, correspond à un rotor dont les aimants 10 sont maintenus par une réglette de fixation 18 à flancs latéraux 22 arrondis selon l'invention.

On constate alors que l'inversion se fait progressivement et sur une durée limitée. Ceci permet avantageusement de conserver un couple moyen élevé, tout en réduisant les ondulations de couple.

## Revendications

1. Pièce mobile (3) porte-aimants pour machine synchrone (1) à aimants permanents, prévue pour se déplacer en face d'un stator (2) fixe comprenant un ensemble de bobines d'induction (8), pièce mobile (3) comportant un châssis (9) métallique et une série d'aimants permanents (10) solidarisés avec ledit châssis (9), ces aimants (10) étant disposés en rangées (13) parallèles entre elles et perpendiculaires au mouvement de la pièce mobile (3), ces aimants (10) étant de même polarité au sein d'une même rangée (13), pièce mobile (3) comportant également au moins une réglette de fixation (18) amagnétique placée longitudinalement entre deux rangées (13) successives d'aimants permanents (10) et fixée mécaniquement au châssis (9), dans laquelle ladite réglette de fixation (18) :
. s'étend sur sensiblement toute la longueur de ces deux rangées (13) et contribue au blocage de tous les aimants (10) de ces deux rangées (13),
. comporte une base d'appui (19) à flancs latéraux (22) arrondis convexes, qui assure le blocage vertical des aimants (10) de ces deux rangées (13), et une extension supérieure longitudinale (20) qui sert d'entretoise entre ces deux rangées (13) et assure le blocage latéral des aimants (10) de ces deux rangées (13) du côté de la réglette de fixation (18),
et chaque aimant (10) de ces deux rangées (13) comporte, au niveau de son chant (24) adjacent à la réglette de fixation (18), une partie concave (26) arrondie, de hauteur au moins égale à la moitié de la hauteur totale de l'aimant et de forme complémentaire à celle du flanc latéral (22) arrondi convexe correspondant de la base d'appui (19) de la réglette de fixation (18), dans laquelle la base d'appui (19) de la réglette de fixation (18) est au moins partiellement engagée.

2. Pièce mobile (3) porte-aimants selon la revendication 1 **caractérisée en ce qu'**elle comporte une réglette de fixation (18) entre chaque rangée (13) d'aimants permanents (10).

3. Pièce mobile (3) porte-aimants selon l'une quelconque des revendications précédentes **caractérisée en ce que** la réglette de fixation (18) est fixée au châssis (9) par vissage, au moyen de vis (27) qui traversent des trous (9a) ménagés dans le châssis (9) et viennent s'engager dans des trous taraudés (19a) de la réglette de fixation (18).

4. Pièce mobile (3) porte-aimants selon la revendication 3 **caractérisée en ce que** la largeur de l'extension supérieure longitudinale (20) est inférieure au diamètre des trous taraudés (19a) de la réglette de fixation (18).

5. Pièce mobile (3) porte-aimants selon la revendication 3 ou 4 **caractérisée en ce que** lesdits trous taraudés (19a) sont réalisés dans la base d'appui (19) de la réglette de fixation (18), l'extension supérieure longitudinale (20) de la réglette de fixation (18) étant interrompue au niveau de ces trous taraudés (19a).

6. Pièce mobile (3) porte-aimants selon l'une quelconque des revendications précédentes **caractérisée en ce que** la réglette de fixation (18) comporte à l'une au moins de ses extrémités (29) une extension (30) servant de butée au dernier aimant (31) d'au moins une des deux rangées (13) entre lesquelles la réglette de fixation (18) est placée, cette extension (30) assurant ainsi le blocage longitudinal des aimants (10) de cette rangée (13).

7. Pièce mobile (3) porte-aimants selon l'une quelconque des revendications précédentes **caractérisée en ce que** les flancs latéraux (22) arrondis convexes de la base d'appui (19) de la réglette de fixation (18) sont en développante de cercle ou en arc de cercle.

8. Pièce mobile (3) porte-aimants selon l'une quelconque des revendications précédentes **caractérisée en ce qu'**il s'agit d'une pièce mobile à déplacement linéaire ou tournant, pour une machine de type moteur ou générateur.

9. Pièce mobile (3) porte-aimants selon l'une quelconque des revendications précédentes **caractérisée en ce qu'**il s'agit d'un rotor (4) de moteur de traction.

10. Pièce mobile (3) porte-aimants selon l'une quelconque des revendications précédentes **caractérisée en ce que** les aimants permanents (10) sont en outre fixés par collage sur le châssis (9).

11. Pièce mobile (3) porte-aimants selon l'une quelconque des revendications précédentes **caractérisée en ce que** les aimants permanents (10) et au moins une partie du châssis (9) sont enrobés d'une résine d'appui, de maintien et de protection.

12. Procédé d'obtention d'une pièce mobile (3) porte-aimants conforme à l'une quelconque des revendications 1 à 11, comportant à les étapes suivantes :
- fournir un châssis métallique (9) et ménager des trous (9a) dans le châssis (9) selon des directions radiales,
- fournir des réglettes de fixation (18) amagnétiques comportant une base d'appui (19) à flancs latéraux (22) arrondis convexes et une extension supérieure longitudinale (20),
- fournir des aimants permanents (10) ou des éléments magnétisables comportant, au niveau de leurs chants (24) une partie concave (26) arrondie, de hauteur au moins égale à la moitié de la hauteur totale de l'aimant permanent ou de l'élément magnétisable, et de forme complémentaire à celle des flancs latéraux (22) arrondis convexes de la base d'appui (19) des réglettes de fixation (18),
- mettre en place successivement sur le châssis (9) des rangées (13) desdits aimants permanents (10) ou éléments magnétisables, en laissant des espaces libres au moins entre les aimants permanents (10) ou éléments magnétisables de rangées (13) différentes,
- placer les réglettes de fixation (18) longitudinalement entre les rangées (13) et retenir lesdits aimants permanents (10) ou éléments magnétisables sur le châssis (9) au moins à l'aide des réglettes de fixation (18) amagnétiques, en engageant au moins partiellement la base d'appui (19) des réglettes de fixation (18) dans la partie concave (26) arrondie des aimants permanents (10) ou des éléments magnétisables pour les bloquer verticalement et en les bloquant latéralement au moyen de l'extension supérieure longitudinale (20) des réglettes de fixation (18) servant d'entretoise entre les rangées (13), les réglettes de fixation (18) étant fixées sur ledit châssis (9) grâce à des vis (27) traversant les trous (9a) et engagées dans lesdites réglettes de fixation (18),
- remplir au moins ces espaces libres avec une résine d'appui,
- polymériser la résine d'appui,
- et, dans le cas où l'on utilise des éléments magnétisables, magnétiser lesdits éléments magnétisables de manière à ce qu'ils constituent des aimants permanents (10).

13. Procédé selon la revendication 12, **caractérisé en ce qu'**il consiste à fixer les éléments magnétisables ou les aimants permanents (10) sur le châssis (9), également par collage au préalable de l'opération de fixation par réglettes de fixation (18).

14. Procédé selon la revendication 12 ou 13, **caractérisé en ce qu'**il consiste à visser les réglettes de fixation (18) directement sur le châssis (9).

15. Machine synchrone à aimants permanents (10), **caractérisée en ce qu'**elle comporte une pièce mobile (3) porte-aimants conforme à l'une quelconque des revendications 1 à 11.

## Patentansprüche

1. Beweglicher Magnethalter (3) für Synchronmaschine (1) mit Permanentmagneten, der dazu vorgesehen ist, sich vor einem festen Stator (2) zu bewegen, umfassend einen Bausatz Induktionsspulen (8), der bewegliche Halter (3) umfasst einen Metallrahmen (9) und eine Reihe von Permanentmagneten (10), die an diesem Rahmen (9) befestigt sind, diese Magnete (10) sind in zueinander parallelen und zur Bewegung des beweglichen Halters (3) senkrechten Reihen (13) angeordnet, diese Magnete (10) haben innerhalb derselbe Reihe (13) dieselbe Polarität, beweglicher Halter (3), der auch mindestens eine antimagnetische Befestigungsleiste (18) enthält, die in Längsrichtung zwischen zwei aufeinanderfolgenden Reihen (13) Permanentmagneten (10) angeordnet und mechanisch am Rahmen (9) befestigt ist,
bei dem diese Befestigungsleiste (18):
- im Wesentlichen über die gesamte Länge dieser beiden Reihen (13) verläuft und mit dazu beiträgt, alle Magnete (10) dieser beiden Reihen (13) zu blockieren,
- eine Auflagefläche (19) mit abgerundeten, konvexen Seitenflächen (22) umfasst, die das Blockieren in vertikaler Richtung der Magnete (10) dieser beiden Reihen (13) gewährleistet und eine obere Erweiterung in Längsrichtung (20), die als Abstandshalter zwischen diesen beiden Reihen (13) dient und das seitliche Blockieren der Magnete (10) dieser beiden Reihen (13) auf der Seite der Befestigungsleiste (18) sicherstellt,
und jeder Magnet (10) dieser beiden Reihen (13) umfasst, in Höhe seiner Kante (24) hin zur Befestigungsleiste (18), einen konkaven, abgerundeten Teil (26), dessen Höhe mindestens gleich der Hälfte der Gesamthöhe des Magnets ist und dessen Form komplementär zu der der abgerundeten, konvexen Seitenfläche (22) ist, entsprechend der Auflagefläche (19) der Befestigungsleiste (18), in der die Auflagefläche (19) der Befestigungsleiste (18) zumindest teilweise eingerastet ist.

2. Beweglicher Magnethalter (3) nach Anspruch 1, **dadurch gekennzeichnet, dass** er eine Befestigungsleiste (18) zwischen jeder Reihe (13) Permanentmagnete (10) enthält.

3. Beweglicher Magnethalter (3) nach einem der vorangehenden Ansprüche, **dadurch gekennzeichnet, dass** die Befestigungsleiste (18) am Rahmen (9) angeschraubt ist, mit Schrauben (27) die durch Bohrungen (9a) hindurchführen, die im Rahmen (9) ausgespart sind und in die Gewindebohrungen (19a) der Befestigungsleiste (18) greifen.

4. Beweglicher Magnethalter (3) nach Anspruch 3, **dadurch gekennzeichnet, dass** die Breite der oberen Längserweiterung (20) kleiner ist, als der Durchmesser der Gewindebohrungen (19a) der Befestigungsleiste (18).

5. Beweglicher Magnethalter (3) nach Anspruch 3 oder 4, **dadurch gekennzeichnet, dass** diese Gewindebohrungen (19a) in der Auflagefläche (19) der Befestigungsleiste (18) ausgeführt sind, die obere Längserweiterung (20) der Befestigungsleiste (18) ist dabei in Höhe dieser Gewindebohrungen (19a) unterbrochen.

6. Beweglicher Magnethalter (3) nach einem der vorangehenden Ansprüchen, **dadurch gekennzeichnet, dass** die Befestigungsleiste (18) an mindestens einem ihrer Endstücke (29) eine Erweiterung (30) umfasst, die als Anschlag für den letzten Magneten (31) mindestens einer dieser Reihen (13) dient, zwischen denen die Befestigungsleiste (18) angeordnet ist, diese Erweiterung (30) sorgt so für das Blockieren in Längsrichtung der Magnete (10) dieser Reihe (13).

7. Beweglicher Magnethalter (3) nach einem der vorangehenden Ansprüche, **dadurch gekennzeichnet, dass** die abgerundeten, konvexen Seitenflächen (22) der Auflagefläche (19) der Befestigungsleiste (18) eine Kreisevolvente oder einen Kreisbogen bilden.

8. Beweglicher Magnethalter (3) nach einem der vorangehenden Ansprüche, **dadurch gekennzeichnet, dass** es sich um ein bewegliches Teil mit linearer oder drehender Bewegung, für eine Maschine vom Typ Motor oder Generator handelt.

9. Beweglicher Magnethalter (3) nach einem der vorangehenden Ansprüche, **dadurch gekennzeichnet, dass** es sich um den Rotor (4) eines Traktionsmotors handelt.

10. Beweglicher Magnethalter (3) nach einem der vorangehenden Ansprüche, **dadurch gekennzeichnet, dass** die Permanentmagnete (10) außerdem durch Kleben auf einem Rahmen (9) befestigt sind.

11. Beweglicher Magnethalter (3) nach einem der vorangehenden Ansprüche, **dadurch gekennzeichnet, dass** die Permanentmagnete (10) und mindestens ein Teil des Rahmens (9) von einem Harz als Auflage, Halterung und zum Schutz umgeben sind.

12. Verfahren zum Herstellen eines beweglichen Magnethalters (3) nach einem der vorangehenden Ansprüche 1 bis 11, das die folgenden Schritte umfasst:
- Bereitstellung eines Metallrahmens (9) und Aussparung von Gewindebohrungen (9a) im Rahmen (9) in radialen Richtungen,
- Bereitstellung von antimagnetischen Befestigungsleisten (18), die eine Auflagefläche (19) mit abgerundeten, konvexen Seitenflächen (22) und eine obere Längserweiterung (20) umfassen
- Permanentmagneten (10) oder magnetisierbare Elemente bereitstellen, die in Höhe ihrer Kante (24) einen konkaven, abgerundeten Teil (26) umfassen, dessen Höhe mindestens gleich der Hälfte der Gesamthöhe des Permanentmagneten ist und dessen Form komplementär zu der der abgerundeten, konvexen Seitenfläche (22) der Auflagefläche (19) der Befestigungsleisten (18) ist,
- auf dem Rahmen (9) nacheinander Reihen (13) dieser Permanentmagneten (10) oder magnetisierbaren Elemente anordnen, mit einem freien Abstand zumindest zwischen den Permanentmagneten (10) oder magnetisierbare Elementen in unterschiedlichen Reihen (13),
- die Befestigungsleisten (18) in Längsrichtung zwischen den Reihen (13) anordnen und die Permanentmagneten (10) oder magnetisierbaren Elemente am Rahmen (9) befestigen, mindestens mit Hilfe der antimagnetischen Befestigungsleisten (18), indem mindestens teilweise die Auflagefläche (19) der Befestigungsleisten (18) in den konkaven, abgerundeten Teil (26) der Permanentmagneten (10) oder magnetisierbaren Elemente eingerastet wird, um sie senkrecht zu blockieren und um sie seitlich mittels der oberen Erweiterung in Längsrichtung (20) der Befestigungsleisten (18) zu blockieren, die als Abstandshalter zwischen den Reihen (13) dienen, die Befestigungsleisten (18) sind am genannten Rahmen (9) über Schrauben (27) befestigt, die durch die Bohrungen (9a) führen und in diese Befestigungsleisten (18) geschraubt sind,
- mindestens die freien Abstände mit einem Auflageharz füllen,
- das Auflageharz polymerisieren,
- und für den Fall, dass magnetisierbare Elemente verwendet werden, diese magnetisierbaren Elemente in einer Art und Weise magnetisieren, dass sie Permanentmagneten (10) bilden.

13. Verfahren gemäß Anspruch 12, **dadurch gekennzeichnet, dass** es darin besteht, die magnetisierbaren Elemente oder Permanentmagneten (10) auch durch Kleben, vor dem Befestigungsvorgang über Befestigungsleisten (18) am Rahmen (9) zu befestigen.

14. Verfahren gemäß Anspruch 12 oder 13, **dadurch gekennzeichnet, dass** es darin besteht, die Befestigungsleisten (18) direkt auf den Rahmen (9) zu schrauben.

15. Synchronmaschine mit Permanentmagneten (10), **dadurch gekennzeichnet, dass** sie einen beweglichen Magnethalter (3) nach einem der Ansprüche 1 bis 11 umfasst.

## Claims

1. A magnet-bearing moving part (3) for permanent magnet synchronous machine (1) provided for movement in front of a fixed stator (2) comprising a set of induction coils (8), the moving part (3) including a metallic frame (9) and a series of permanent magnets (10) secured to said frame (9), these magnets (10) being arranged in rows (13) parallel to each other and perpendicular to the movement of the moving part (3), these magnets (10) being of the same polarity within the same row (13), the moving part (3) also comprising at least one non-magnetic securing strip (18) longitudinally placed between two successive rows (13) of permanent magnets (10) and mechanically secured to the frame (9),
wherein said securing strip (18):
• extends substantially over the entire length of these two rows (13) and contributes to blocking all the magnets (10) of these two rows (13),
• comprises a support base (19) with convex rounded lateral sides (22), which ensures the vertical blocking of the magnets (10) of these two rows (13), and a longitudinal upper extension (20) that acts as a spacer between these two rows (13) and provides lateral blocking of the magnets (10) of these two rows (13) on the side of the securing strip (18),
and each magnet (10) of these two rows (13) comprises, at its edge (24) adjacent to the securing strip (18), a concave rounded portion (26) of a height equal to at least half of the total height of the magnet and of a shape complementary to the corresponding convex rounded lateral side (22) of the support base (19) of the securing strip (18), in which the support base (19) of the securing strip (18) is at least partially engaged.

2. The magnet-bearing moving part (3) according to claim 1, **characterised in that** it comprises a securing strip (18) between each of the rows (13) of permanent magnets (10).

3. The magnet-bearing moving part according to any one of the preceding claims, **characterised in that** the securing strip (18) is fixed to the frame (9) by screwing, using screws (27) that pass through holes (9a) created in the frame (9) and that are engaged in threaded holes (19a) of the securing strip (18).

4. The magnet-bearing moving part (3) according to claim 3, **characterised in that** the width of the longitudinal upper extension (20) is smaller than the diameter of the threaded holes (19a) of the securing strip (18).

5. The magnet-bearing moving part (3) according to claim 3 or 4, **characterised in that** the said threaded holes (19a) are formed in the support base (19) of the securing strip (18), the longitudinal upper extension (20) of the securing strip (18) being interrupted at these threaded holes (19a).

6. The magnet-bearing moving part (3) according to any one of the preceding claims, **characterised in that** the securing strip (18) comprises, on at least one end (29) thereof, an extension (30) serving as an abutment to the last magnet (31) of at least one of the two rows (13) between which the securing strip (18) is placed, this extension (30) thus ensuring longitudinal blocking of the magnets (10) in this row (13).

7. The magnet-bearing moving part (3) according to any of the preceding claims, **characterised in that** the convex rounded lateral sides (22) of the support base (19) of the securing strip (18) are involute or arcuate.

8. The magnet-bearing moving part (3) according to any one of the preceding claims, **characterised in that** it is a moving part with linear or rotating movement, for a motor or a generator.

9. The magnet-bearing moving part (3) according to any one of the preceding claims, **characterised in that** it is a traction motor rotor (4).

10. The magnet-bearing moving part (3) according to any one of the preceding claims, **characterised in that** the permanent magnets (10) are further secured to the frame (9) by adhesion.

11. The magnet-bearing moving part (3) according to any one of the preceding claims, **characterised in that** the permanent magnets (10) and at least a part of the frame (9) are coated with a resin for support, retention and protection.

12. A method for obtaining a magnet-bearing moving part (3) according to any one of the claims 1 to 11, comprising the following steps:
• providing a metallic frame (9) and creating holes (9a) in the frame (9) in radial directions,
• providing non-magnetic securing strips (18) comprising a support base (19) with convex rounded lateral sides (22) and a longitudinal upper extension (20),
• providing permanent magnets (10) or magnetisable elements comprising, at their edges (24), a concave rounded portion (26) of a height equal to at least half of the total height of the permanent magnet or magnetisable element and of a shape complementary to the convex rounded lateral sides (22) of the support base (19) of the securing strips (18),
• arranging on the frame (9) successive rows (13) of said permanent magnets (10) or magnetisable elements, leaving empty spaces at least between the permanent magnets (10) or magnetisable elements of different rows (13),
• longitudinally placing the non-magnetic securing strip (18) between the rows (13) and holding said permanent magnets (10) or magnetisable elements on the frame (9) using at least the non-magnetic securing strips (18), by engaging at least partially the support base (19) of the securing strips (18) in the concave rounded portion (26) of the permanent magnets (10) or magnetisable elements to vertically block them and by laterally blocking them using the longitudinal upper extension (20) of the securing strip (18) that acts as a spacer between the rows (13), the securing strips (18) being secured to said frame (9) by means of screws (27) passing through the holes (9a) and engaged in said securing strips (18),
• filling at least said empty spaces with a support resin,
• polymerising the support resin,
• and, in the case where magnetisable elements are used, magnetising said magnetisable elements so that they are permanent magnets (10).

13. The method according to claim 12, **characterised in that** it consists in securing the magnetisable elements or permanent magnets (10) to the frame (9), also by adhesion prior to the securing operation using securing strips (18).

14. The method according to claim 12 or 13, **characterised in that** it consists in screwing the securing strips (18) directly on the frame (9).

15. A synchronous machine with permanent magnets (10), **characterised in that** it comprises a magnet-bearing moving part (3) according to any one of the claims 1 to 11.
